**Europäisches Patentamt**

(19) **European Patent Office**

**Office européen des brevets**

(11) Veröffentlichungsnummer: **0 010 578**
**B1**

(12) # EUROPÄISCHE PATENTSCHRIFT

(45) Veröffentlichungstag der Patentschrift:
28.10.81

(51) Int. Cl.³: **B 23 B 7/00**, B 23 Q 15/00

(21) Anmeldenummer: 79102813.7

(22) Anmeldetag: 27.09.79

(54) CNC-gesteuerte einspindlige Präzisions-Drehmaschine mit einem konkaven oder konvexen Werkzeugweg.

(30) Priorität: 04.11.78 DE 2847943

(43) Veröffentlichungstag der Anmeldung:
14.05.80 Patentblatt 80/10

(45) Bekanntmachung des Hinweises auf die Patenterteilung:
28.10.81 Patentblatt 81/43

(84) Benannte Vertragsstaaten:
BE DE FR GB IT LU NL

(56) Entgegenhaltungen:
CH-A-432 181
DE-A-2 104 905

MASCHINE UND WERKZEUG, Sondernummer
3. September 1977, Coburg, «Neuentwickelte
CNC-Drehmaschinen erschliessen unteren Werkstückbereich» Seiten 36 bis 38

WERKSTATT UND BETRIEB, Band 105, Heft 12, 1972
München, W. SCHWEIZER «Numerisch-programmgesteuerter Drehautomat» Seiten 883 bis 885

ZEITSCHRIFT FÜR WIRTSCHAFTL. FERTIGUNG,
Band 71, Heft 8, 1976, Freiburg i. Br., G. SPUR et al.:
«CNC-Computer Numerical Control» Seiten 324 bis 327

(73) Patentinhaber: **A. Ehrenreich GmbH & Co. KG,**
**Hansaallee 190, D-4000 Düsseldorf 11 (DE)**

(72) Erfinder: **Guhl, Karl-Heinz, Dipl.-Ing., Erika Weg 20,**
**D-4005 Meerbusch 2 (DE)**

CNC-gesteuerte einspindlige Präzisions-Drehmaschine mit einem konkaven oder konvexen Werkzeugweg

Die Erfindung geht von einer Einspindel-Drehmaschine mit CNC-Mehrbahnsteuerung aus. Es handelt sich dabei um eine Drehmaschine mit einem Längssupport und einem darauf angeordneten Quersupport, mit je einem von der Steuerung ansteuerbaren Antrieb, einem auf dem Quersupport angeordneten zweiten Quersupport und einem Drehwerkzeughalter. Dabei soll zum Herstellen von konkaven und konvexen Werkstückflächen dem Drehwerkzeughalter ausser einer Längsvorschubbewegung eine in Bewegungsrichtung des Quersupports verlaufende, auf das Werkstück zu, und ab einem Umkehrpunkt, eine vom Werkstück weg (oder umgekehrt) gerichtete Vorschubbewegung mit jeweils vorgegebenen Geschwindigkeiten erteilbar sein.

Bei derartigen CNC-gesteuerten Drehmaschinen taucht das Problem des Umkehrsprunges insbesondere dann auf, wenn es sich um Präzisionsteile mit kurvenförmigen Profilen handelt, in allen Fällen also, wo die gewünschte Werkstückform eine Umkehr der Bewegungsrichtung des Werkzeuges erfordert.

So treten zum Beispiel bei der Bearbeitung von Kugelflächen beim Kreisfahren des Werkzeugträgers Schwierigkeiten hinsichtlich der Einhaltung der korrekten Kreisform auf. Die Umkehrpunkte des Vorschubantriebes des Quersupporters finden sich als Formabweichungen der Kugelfläche wieder, und zwar als Spitzen oder Stufen. In den Umkehrpunkten erfolgt die Umkehrbewegung des Quersupportes nämlich mit Verzögerung und ergibt eine Verzerrung, das heisst, eine Abweichung von der Kreisform.

Eine Einspindel-Drehmaschine gemäss dem Oberbegriff des Patentanspruches ist bekannt (DE-A- 2 104 905). Der zweite Quersupport, der einen sehr schnellen Eilgang besitzt, dient jedoch nur dazu, einen Mehrfachwerkzeugträger für dessen Schaltbewegung zwischen zwei Festanschlägen zu verfahren – diese Bewegung ist beim Schalten in vielen Fällen aus Platzgründen erforderlich – gleichwohl aber die Zeiten für die langen Schlittenverfahrwege zu verkürzen. Der Erfindung liegt die Aufgabe zugrunde, eine CNC-gesteuerte Einspindel-Drehmaschine der genannten Gattung zu schaffen, bei welcher während der Arbeitsoperation bei Umkehr der Richtung der Vorschubbewegung des Werkzeuges kein Umkehrsprung erfolgt.

Erfindungsgemäss besteht die Lösung dieser Aufgabe in den kennzeichnenden Merkmalen des Patentanspruches.

Alle Abweichungen von der gewünschten Form des Werkstückes, die bisher durch Umkehrpunkte des Vorschubantriebes verursacht wurden, treten bei der Bearbeitung eines Werkstückes mit der erfindungsgemässen Maschine nicht mehr auf, da die Antriebe selbst keine Bewegungsumkehr erfahren.

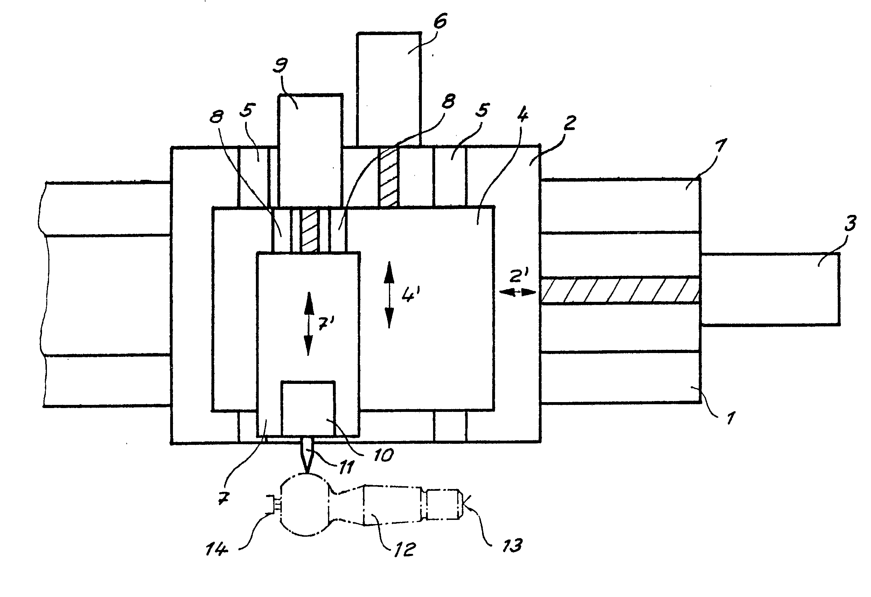

Die Erfindung wird anhand der Zeichnung erläutert:

Die Abbildung zeigt schematisch die Draufsicht auf die Supporte einer Einspindel-Drehmaschine und ein damit zweckmässig zu bearbeitendes Werkstück. Auf einer Drehbankführung 1 ist ein Längssupport 2 in Richtung 2' verschiebbar gelagert. Ein Vorschubantrieb für den Längssupport 2 ist mit 3 bezeichnet. Auf dem Längssupport 2 befindet sich ein unterer Quersupport 4, der auf Führungen 5 durch einen Antrieb 6 in Richtung 4' verschiebbar ist. Auf dem unteren Quersupport 4 ist ein Drehwerkzeughalter 10 unter Zwischenschaltung eines – ebenfalls mit einem von der Steuerung ansteuerbaren Antrieb 9 versehenen – zweiten Quersupportes 7 auf dem Quersupport 4 angeordnet. Der zweite Quersupport 7 ist auf Führungen 8 verschiebbar gelagert und durch den Antrieb 9 in Richtung 7' bewegbar. Auf dem Werkzeughalter 10 des zweiten Quersupportes 7 befindet sich ein Werkzeug 11 zwecks Bearbeitung eines Kugelzapfens 12, der zwischen einer Pinole 13 und einem Mitnehmer 14 eingespannt ist.

Die Wirkungsweise der erfindungsgemässen Drehmaschine ist folgende:

Bei der Bearbeitung des eingespannten Kugelzapfens 12 zum Beispiel bewegt sich das Werkzeug 11 auf der Zeichnung von rechts nach links, das heisst, von der Pinole 13 in Richtung auf den Mitnehmer 14 zu. Dabei bewegt sich zur Bearbeitung des zylindrischen Teils des Kugelzapfens 12 nur der Längssupport 2, während beide Quersupporte 4 und 7 in einer bestimmten Position stillstehen. Am Ende des zylindrischen Teils des Kugelzapfens 12 ist als Übergang zum konischen Teil ein Radius vorhanden. Da auf dem Radius Formfehler zulässig sind, ebenso wie am Übergang vom ansteigenden zum abfallenden Teil des Konus, genügt es, wenn sich zum Beispiel nur der obere Quersupport 7 vom Werkstück weg oder auf dieses zu, entsprechend der Schaftform bewegt. Am Übergang zur Kugelfläche läuft dann auch der untere Quersupport 4 mit, und zwar abwärts oder aufwärts zur Bearbeitung der Kugelfläche. Dabei werden die Antriebe 6 und 9 derart angesteuert, dass sie gegenläufig wie folgt arbeiten:

Im ersten ansteigenden Bereich der Kugel ist die Geschwindigkeit des Quersupportes 4 kleiner als die Geschwindigkeit des Quersupportes 7, nur am Umkehrpunkt sind beide Geschwindigkeiten gleich und im letzten, zum Mitnehmer 14 hin abfallenden Bereich der Kugel ist die Geschwindigkeit des Quersupportes 4 grösser als die des Quersupportes 7. Dadurch, dass beide Quersupporte 4 und 7 gegensinnig antreibbar sind, mit Geschwindigkeiten, deren Differenz in den Umkehrpunkten gleich Null und in den übrigen Bereichen nach Grösse und Richtung gleich den vorgegebenen Vorschubgeschwindigkeiten für den Drehwerkzeughalter 10 sind, werden eine Drehrichtungsänderung des Vorschubantriebes und Abweichungen von der Kugelform am Umkehrpunkt vermieden.

Die Programmierung der Steuerung macht keine Schwierigkeiten. Anstatt einer üblichen Bahnsteuerung für zwei Achsen – für eine übliche Drehmaschine mit einem Längs- und einem Quersupport – ist für die erfindungsgemässe Drehmaschine eine Bahnsteuerung für drei Achsen erforderlich.

Das dem Anmeldungsgegenstand zugrunde liegende Prinzip ist bei allen Werkzeugmaschinen anwendbar, bei denen in vergleichbarer Weise konkave bzw. konvexe Flächen an Werkstücken erzeugt werden, wie zum Beispiel beim Umrissfräsen, beim Profilschleifen usw.

**Patentanspruch**

Einspindel-Drehmaschine mit CNC-Mehrbahnsteuerung, mit einem Längssupport (2) und einem darauf angeordneten Quersupport (4), mit je einem von der Steuerung ansteuerbaren Antrieb (3, 6), einem auf dem Quersupport (4) angeordneten zweiten Quersupport (7) und einem Drehwerkzeughalter (10), dadurch gekennzeichnet, dass der zweite Quersupport (7) ebenfalls mit einem von der Steuerung ansteuerbaren Antrieb (9) versehen ist und dass die beiden Quersupporte (4; 7) gegensinnig antreibbar sind, mit Geschwindigkeiten, deren Differenz in den Umkehrpunkten gleich Null und in den übrigen Bereichen nach Grösse und Richtung gleich den vorgegebenen Vorschubgeschwindigkeiten für den Drehwerkzeughalter (10) ist.

**Claim**

A single-spindle lathe with CNC multiple-track control, having a longitudinal carriage (2) and a cross carriage (4) disposed thereon, each with a drive (3, 6) which can be controlled by the control, a second cross carriage (7) disposed on the cross carriage (4) and a lathe tool holder (10), characterised in that the second cross carriage (7) is likewise provided with a drive (9) which can be controlled by the control and that the two cross carriages (4; 7) can be driven in opposite directions at speeds the difference of which is equal to zero at the reversing points and in the other regions is equal in magnitude and direction to the pre-set feed rate for the lathe tool holder (10).

**Revendication**

Machine de tournage à une seule broche à commande CNC à plusieurs voies, comprenant un support longitudinal (2) et un support transversal (4) disposé au-dessus du précédent, un dispositif d'entraînement (3, 6) respectif pouvant être déclenché par la commande, un second support transversal (7) disposé au-dessus du premier support transversal (4) et une retenue (10) pour l'outil de tournage, caractérisée en ce que le second support transversal (7) comprend également un dispositif d'entraînement pouvant être déclenché par la commande et en ce que les deux supports transversaux (4, 7) peuvent être entraînés en sens inverse, à des vitesses dont la différence est nulle aux points d'inversion et égale, dans les autres portions, en intensité et en direction, aux vitesses de progression prédéterminées pour la retenue (10) de l'outil de tournage.